# EUROPÄISCHE PATENTSCHRIFT

(11) **EP 2 079 603 B1**
(45) Veröffentlichungstag und Bekanntmachung des Hinweises auf die Patenterteilung: **08.11.2017**
(21) Anmeldenummer: 07801304.2
(22) Anmeldetag: 04.09.2007
(51) Int. Cl.: B60L 13/04, B60L 5/00

(54) **EMPFANGSEINHEIT MIT EINER EMPFÄNGERSPULE ZUR BERÜHRUNGSLOSEN ÜBERTRAGUNG VON ELEKTRISCHER ENERGIE UND VERFAHREN ZU IHRER HERSTELLUNG**
RECEPTION UNIT COMPRISING A RECEIVER COIL FOR THE CONTACTLESS TRANSFER OF ELECTRIC ENERGY AND METHOD FOR THE PRODUCTION THEREOF
UNITE DE RECEPTION MUNIE D'UNE BOBINE RECEPTRICE POUR TRANSFERT D'ENERGIE ELECTRIQUE SANS CONTACT ET PROCEDE PERMETTANT DE LA PRODUIRE

(30) Priorität: 11.10.2006 DE 102006048829
(43) Veröffentlichungstag der Anmeldung: 22.07.2009
(73) Patentinhaber: ThyssenKrupp Transrapid GmbH, 34127 Kassel (DE)
(72) Erfinder: HAHN, Wolfgang, 34125 Kassel (DE); ZHENG, Qinghua, 80331 München (DE); DIEKMANN, Andreas, 85586 Poing (DE)
(74) Vertreter: Lorenz, Bernd Ingo Thaddeus
(86) Internationale Anmeldenummer: PCT/DE2007/001567
(87) Internationale Veröffentlichungsnummer: WO 2008/043326

(56) Entgegenhaltungen:
- WO-A-95/11545
- WO-A-2005/090112
- JP-A- 2001 320 803

## Beschreibung

Die Erfindung betrifft eine Empfangseinheit der im Oberbegriff der Ansprüche 1 und 2 angegebenen Gattung und ein Verfahren zu ihrer Herstellung nach dem Oberbegriff des Anspruchs 8.

Empfangseinheiten dieser Art sind bekannt (DE 10 2004 056 439 A1). Sie dienen insbesondere bei Magnetschwebebahnen zur berührungslosen, induktiven Übertragung elektrischer Energie von einem Fahrweg auf ein Fahrzeug. Zu diesem Zweck ist am Fahrweg wenigstens ein an eine Spannungsquelle angeschlossener, als Sendespule ausgebildeter Primärleiter und am Fahrzeug wenigstens eine sekundäre Empfängerspule vorgesehen. Diese ist vorzugsweise als Bestandteil einer Empfangseinheit ausgebildet und mit dieser an einem die Tragmagnete aufweisenden Magnetrückenkasten befestigt, der seinerseits über Gestellbügel mit einem Untergestell bzw. Wagenkasten des Fahrzeugs verbunden ist.

Zur Verbesserung der magnetischen Kopplung zwischen dem Primärleiter und der Empfängerspule und zur Vermeidung von Wirbelstromverlusten ist die Empfängerspule auf ihrer vom Primärleiter abgewandten Seite mit Mitteln zur Konzentration der vom Primärleiter erzeugten magnetischen Feldlinien versehen. Diese Mittel enthalten Flussleitelemente in Form von Streifen und deren Enden verbindenden Verbindungselementen aus einem Material mit hoher Permeabilität und hohem elektrischen Widerstand, vorzugsweise aus einem Ferrit, insbesondere einem Weichferrit. Die Streifen und Verbindungselemente werden durch Kleben oder sonst wie zu einem an die Empfängerspule anzulegenden Gitterrahmen verbunden.

Die Herstellung von Flussleitelementen aus einem Material wie Ferrit od. dgl. erfolgt durch Pressen und nachfolgendes Sintern eines aus diesem Material hergestellten Pulvers. Die dadurch erhaltenen Flussleitelemente sind vergleichsweise spröde, mechanisch empfindlich und schlecht bearbeitbar. Außerdem ist das Zusammenfügen der Flussleitelemente zu einem Gitterrahmen mit einem hohen Arbeitsaufwand verbunden.

Ausgehend davon liegt der Erfindung das technische Problem zugrunde, die Herstellung der Empfangseinheit zu vereinfachen.

Zur Lösung dieser Aufgabe dienen die kennzeichnenden Merkmale der Ansprüche 1, 2 und 8.

Die Erfindung bringt den Vorteil mit sich, dass eine die Flussleitelemente enthaltende Baueinheit erhalten wird, die auf einfache Weise komplett vorgefertigt werden kann, und zwar wahlweise mit oder ohne zugeordnete Empfängerspule. Da die einzelnen Flussleitelemente durch einen Gießvorgang miteinander verbunden und in einem Grundkörper platziert werden, treten die Schwierigkeiten, die bisher mit Flussleitelementen aus Ferrit od. dgl. verbunden waren, nicht mehr auf.

Weitere vorteilhafte Merkmale der Erfindung ergeben sich aus den Unteransprüchen.

Die Erfindung wird nachfolgend in Verbindung mit den beiliegenden Zeichnungen an einem Ausführungsbeispiel näher erläutert. Es zeigen:
Fig. 1 schematisch einen Teilschnitt durch ein übliches Magnetschwebefahrzeug im Bereich eines mit einem Langstator versehenen Fahrwegs;
Fig. 2 eine schematische, perspektivische und stark vergrößerte Darstellung eines Teils einer Empfangseinheit;
Fig. 3 schematisch einen Querschnitt durch eine Empfängerspule und den Primärleiter nach Fig. 2;
Fig. 4 eine perspektivische Darstellung eines zur Herstellung einer Empfangseinheit verwendbaren, erfindungsgemäßen Grundkörpers;
Fig. 5 und 6 vergrößerte Schnitte längs der Linien V - V und VI - VI der Fig. 4;
Fig. 7 einen Schnitt durch den Grundkörper entsprechend Fig. 6 nach dem Auflegen einer Empfängerspule und dem Eingießen eines Flussleitmaterials; und
Fig. 8 in auseinander gezogenen, perspektivischen Ansichten schematisch die Entstehung einer bei der Herstellung einer Empfangseinheit verwendbaren, erfindungsgemäßen Baueinheit.

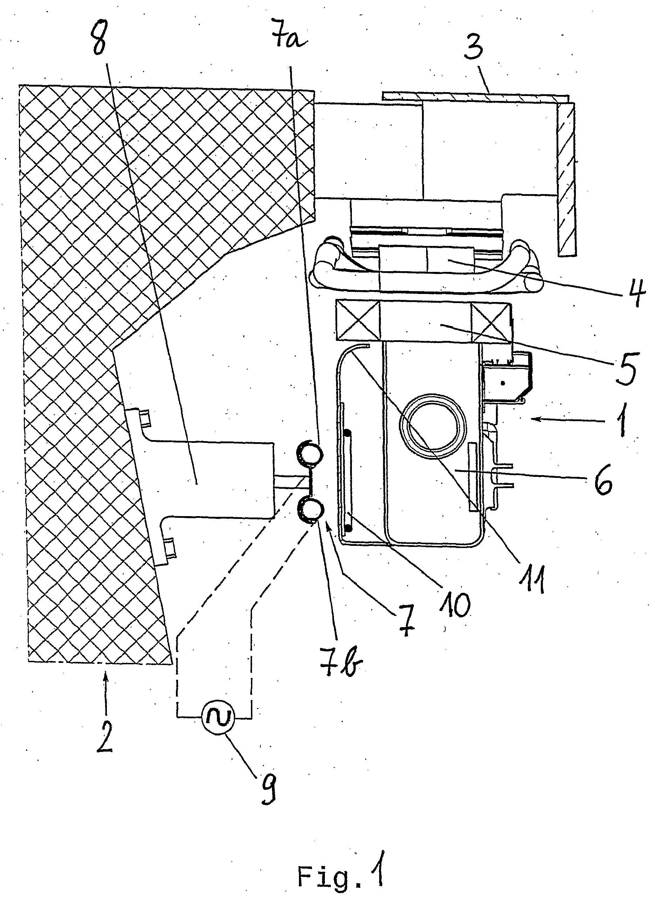

Fig. 1 zeigt schematisch einen Querschnitt durch ein Magnetschwebefahrzeug 1, das in üblicher Weise auf einem in Längsrichtung einer Trasse verlaufenden Fahrweg fahrbar montiert ist, der aus Stahl und/oder Beton hergestellte Träger 2 und auf diesen montierte Fahrwegplatten 3 enthält. Der Antrieb des Magnetschwebefahrzeugs 1 erfolgt mittels eines Langstatormotors, der unterhalb der Fahrwegplatte 3 befestigte, in deren Längsrichtung aufeinander folgende Statorpakete 4 aufweist. Das eigentliche Erregerfeld des Langstatormotors wird durch wenigstens eine mit Tragmagneten versehene Magnetanordnung erzeugt, die den in Fig. 1 nach unten offenen Nuten der Statorpakete 4 zugewandte Magnetpole aufweist. Der Tragmagnet 5 stellt nicht nur das Erregerfeld bereit, sondern erfüllt auch die Funktion des Tragens und Schwebens, indem er beim Betrieb des Magnetschwebefahrzeugs 1 einen vorgegebenen Spalt zwischen dem Tragmagneten 5 und den Statorpaketen 4 aufrecht erhält. Die die Tragmagnete 5 enthaltende Magnetanordnung ist im übrigen in einem Magnetrückenkasten 6 untergebracht, der über seitlich angeordnete Gestellbügel am Magnetschwebefahrzeug 1 befestigt ist.

Längs des Fahrwegs ist ein als Sendespule ausgebildeter Primärleiter 7 vorgesehen, der vorzugsweise je einen hin- und herlaufenden Leitungsabschnitt 7a, 7b enthält und sich zweckmäßig über die gesamte Länge des Fahrwegs erstreckt. Die beiden Leitungsabschnitte 7a, 7b sind z. B. mittels einer aus einem Isolator bestehenden Halterung 8 am Träger 2 befestigt. Der Primärleiter 7 liegt außerdem an einer nur schematisch dargestellten, vorzugsweise hochfrequenten Stromquelle 9 von z. B. 200 A.

Am Magnetschwebefahrzeug 1 ist eine Empfangseinheit mit einer Empfängerspule 10 montiert. Diese ist vorzugsweise so ausgebildet, dass sie den Primärleiter 7 nicht umgreift, sondern diesem mit einem geringen Abstand gegenübersteht. Die Empfängerspule 10 besteht vorzugsweise aus einer Mehrzahl von parallelen Leitern, die so relativ zum Primärleiter 7 angeordnet sind, dass sie von den von diesem bzw. den Leitungsabschnitten 7a, 7b erzeugten, magnetischen Feldlinien durchdrungen werden und an ihren nicht dargestellten Anschlussenden der vom Primärleiter 7 gelieferte Strom von ca. 200 A ausgekoppelt werden kann. Die beiden nicht gezeigten Anschlussenden der Empfängerspule 10 werden in bekannter Weise z. B. mit einem Spannungswandler verbunden, der ein Bestandteil einer üblichen Energieversorgungseinheit ist, die das Magnetschwebefahrzeug 1 mit der für seinen Betrieb erforderlichen elektrischen Energie versorgt. Dabei ist klar, dass zweckmäßig an beiden Seiten des Trägers 2 entsprechende Primärleiter 7 verlegt werden, wenn die Magnetschwebefahrzeuge 1 an beiden Längsseiten mit Tragmagneten 5 versehen sind, und dass in Längsrichtung der Magnetschwebefahrzeuge 1 so viele Empfangseinheiten vorgesehen werden, wie zu ihrem Betrieb erforderlich oder aus Redundanzgründen erwünscht sind.

Die Empfängerspule 10 wird vorzugsweise als vorgefertigte Baugruppe gemeinsam mit den notwendigen Kontaktierungselementen, z. B. Steckverbindern, hergestellt und am Magnetrückenkasten 6 montiert. Besonders zweckmäßig ist es, die Empfängerspule 10 an oder in einer Verkleidung 11 unterzubringen, die an einer dem Primärleiter 7 zugewandten Rückseite des Magnetrückenkastens 6 befestigt ist.

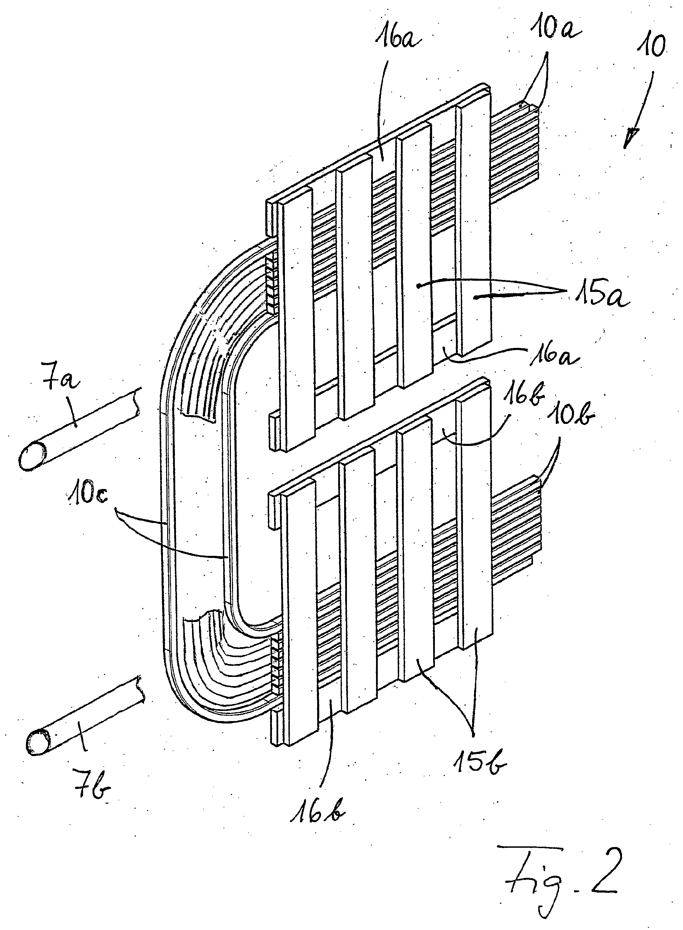

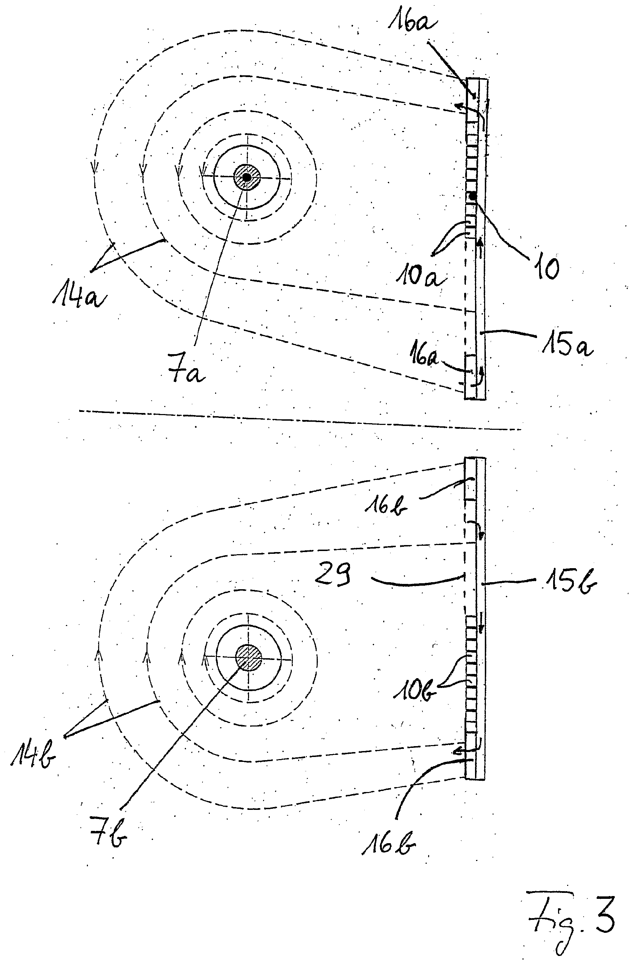

Die Empfängerspule 10 ist vorzugsweise nach Art einer sog. Lagenwicklung ausgebildet. Sie enthält, wie Fig. 2 zeigt, eine Mehrzahl von in einer Ebene liegenden Lagen. Die einzelnen Lagen sind vorzugsweise aus einem Leiter mit rundem oder quadratischem Querschnitt hergestellt und weisen parallel zueinander und längs der Magnetanordnung erstreckte, im wesentlichen geradlinige, erste bzw. zweite Längsabschnitte 10a, 10b sowie deren Enden verbindende Wicklungsköpfe 10c auf. Die Längsabschnitte 10a, 10b verlaufen parallel zu den Leitungsabschnitten 7a, 7b des Primärleiters 7 und dienen der Spannungserzeugung. Dabei sind die ersten Längsabschnitte 10a dem Leitungsabschnitt 7a und die zweiten Längsabschnitte 10b dem Leitungsabschnitt 7b des Primärleiters 7 derart zugeordnet, dass die Leitungsabschnitte 7a, 7b jeweils etwa in der Mitte des von den zugeordneten Längsabschnitten 10a, 10b gebildeten Lagenteils angeordnet sind, wie insbesondere Fig. 3 zeigt. Demgegenüber verlaufen die Leiter der Empfängerspule 10 im Bereich der Wicklungsköpfe 10c im wesentlichen senkrecht zu den Leitungsabschnitten 7a bzw. 7b.

Zur Erhöhung der magnetischen Kopplung zwischen dem Primärleiter 7 und der Empfängerspule 10 und zur Vermeidung von Wirbelstromverlusten weist die Empfangseinheit ferner an einer vom Primärleiter 7 abgewandten Seite der Empfängerspule 10 ein Mittel zur Konzentration der vom Primärleiter 7 erzeugten Feldstärke auf, wie schematisch in Fig. 3 durch magnetische Feldlinien 14a, 14b angedeutet ist. Dieses Mittel enthält Flussleitelemente, die aus einem Material mit hoher Permeabilität und einem hohen spezifischen elektrischen Widerstand bestehen. Ein besonders bevorzugtes Material für diesen Zweck ist Ferrit, insbesondere Weichferrit, das allerdings wegen seiner Herstellung aus ferrimagnetischen Pulvern durch Pressen und nachfolgendes Sintern vergleichsweise spröde, mechanisch empfindlich und daher schlecht bearbeitbar ist. Die Flussleitelemente werden daher bisher aus vielen, vergleichsweise kleinen Materialstreifen und Verbindungselementen zusammengesetzt, die durch Kleben oder sonstwie zu Gitterrahmen miteinander verbunden werden.

Bei einer ebenfalls aus Fig. 2 und 3 ersichtlichen Konstruktion ist z. B. auf einer vom Leitungsabschnitt 7a abgewandten Seite der Empfängerspule 10 eine Mehrzahl von ersten Materialstreifen 15a vorgesehen, die im wesentlichen senkrecht zum Leitungsabschnitt 7a und parallel zu der von den Längsabschnitten 10a gebildeten Wicklungsebene angeordnet sind. An einer vom Leitungsabschnitt 7b abgewandten Seite der Empfängerspule 10 ist bei entsprechender Anordnung eine Mehrzahl von zweiten Materialstreifen 15b vorgesehen, die zweckmäßig in derselben Ebene wie die ersten Materialstreifen 15a liegen. Beide Materialstreifen 15a, 15b haben eine Länge, die etwas größer ist, als der Höhe der von den Längsabschnitten 10a, 10b gebildeten Lagenteile entspricht, ohne dass sie sich mit den einander zugewandten Enden überlappen. Die einzelnen Materialstreifen 15a, 15b sind jeweils gitterartig und mit vorgewählten Abständen parallel zueinander angeordnet.

Die Enden der ersten Materialstreifen 15a sind durch erste Verbindungselemente 16a miteinander verbunden, die im wesentlichen parallel zum Leitungsabschnitt 7a angeordnet sind. Entsprechend sind die Enden der zweiten Materialstreifen 15b durch zweite Verbindungselemente 16b verbunden. Dadurch entstehen nach Art von Gitterrahmen ausgebildete Bauelemente, die an dem Magnetrückenkasten 6 befestigt werden.

Sowohl die Materialstreifen 15a, 15b als auch die Verbindungselemente 16a und 16b bestehen vorzugsweise aus einem Ferrit. Sie sind außerdem zweckmäßig dicht hinter den Längsabschnitten 10a, 10b und so angeordnet, dass sie eine Konzentration der von den Leitungsabschnitten 7a, 7b erzeugten Feldlinien 14a bzw. 14b bewirken, wie in Fig. 3 schematisch angedeutet ist. Dabei ist in Fig. 3 angenommen, dass der Leitungsabschnitt 7a momentan in einer aus der Zeichenebene heraustretenden Richtung und der Leitungsabschnitt 7a momentan in einer in die Zeichenebene eintretenden Richtung vom Strom durchflossen ist. Wegen der hohen Permeabilität der Materialstreifen 15a, 15b werden die Feldlinien 14a, 14b unmittelbar hinter den Leitungsabschnitten 10a, 10b geschlossen, wie in Fig. 3 schematisch durch Pfeile angedeutet ist, wodurch die magnetische Kopplung stark erhöht wird. Gleichzeitig wird vermieden, dass sich größere Wirbelstromverluste ergeben, da die Materialstreifen 15a, 15b und Verbindungselemente 16a, 16b die hinter ihnen liegenden Teile des Magnetrückenkastens 6 wegen ihrer hohen Permeabilität magnetisch abschirmen. Schließlich sollen die Verbindungselemente 16a, 16b eine weitgehend gleichförmige Verteilung des magnetischen Flusses innerhalb der Gitterrahmenstruktur bewirken. Daher ist die Länge der Materialstreifen 15a, 15b und der Verbindungselemente 16a, 16b vorzugsweise so gewählt, dass möglichst viele der Feldlinien 14a, 14b gesammelt bzw. konzentriert werden.

Die Verbindungselemente 16a, 16b werden vorzugsweise auf den den Leitungsabschnitten 7a, 7b zugewandten Seiten der Materialstreifen 15a, 15b befestigt. Dadurch ergibt sich der Vorteil, dass sie im wesentlichen in derselben Ebene wie die Längsabschnitte 10, 10b der Empfängerspule 10 zu liegen kommen, wie insbesondere Fig. 3 zeigt. Dadurch entsteht für sie kein zusätzlicher Raumbedarf, insbesondere wenn ihre Dicke, was in magnetischer Hinsicht ausreicht, etwa gleich der Dicke der Längsabschnitte 10a, 10b ist.

Empfangseinheiten der beschriebenen Art sind aus dem Dokument DE 10 2004 056 439 A1 bekannt, das hiermit zur Vermeidung weiterer Wiederholungen durch Referenz zum Gegenstand der vorliegenden Offenbarung gemacht wird.

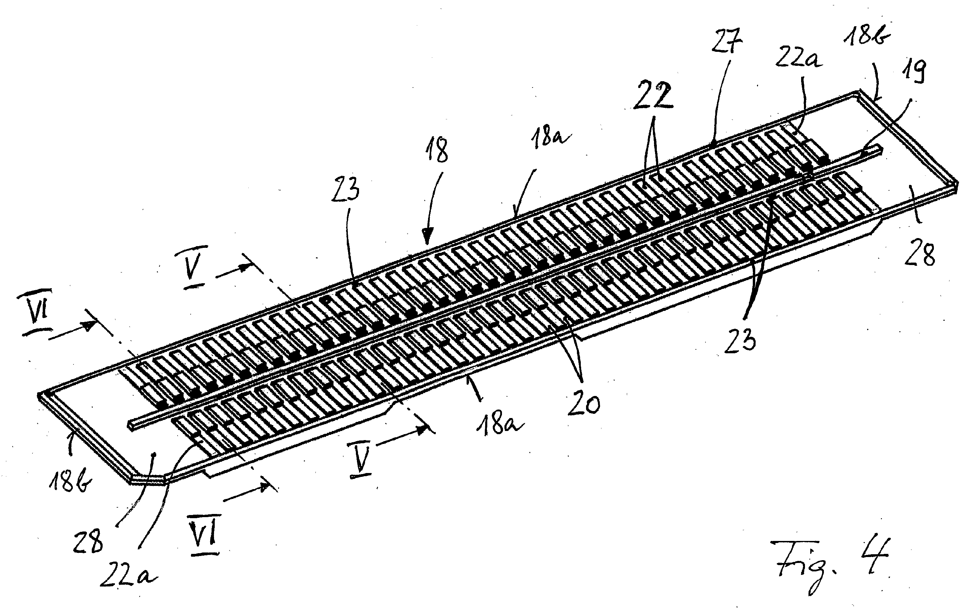

Zur Vereinfachung der Herstellung des aus den Streifen 15a, 15b und Verbindungselementen 16a, 16b bestehenden Gitterrahmens wird erfindungsgemäß von einem Grundkörper 18 (Fig. 4) ausgegangen, der überall dort, wo die Flussleitelemente zu liegen kommen sollen, mit Vertiefungen in Form von Nuten od. dgl. versehen ist, und daher als ordnendes Hilfsmittel angesehen werden kann. Zwischen den Vertiefungen stehen bleibende Stege werden so ausgebildet, dass ihre Oberflächen zumindest teilweise auch als Auflageflächen für die Empfängerspule 10 dienen können. Außerdem bestehen die Flussleitelemente nicht aus einzelnen Streifen und Verbindungselementen, sondern aus einem zusammenhängenden, in den Vertiefungen angeordneten Formteil, das mit dem Grundkörper 18 zu einer komplett vorgefertigten Baueinheit zusammengefasst ist.

Wie aus Fig. 4 bis 6 ersichtlich ist, wird der Grundkörper 18 im Ausführungsbeispiel aus einer ursprünglich planparallelen Platte hergestellt, die wie die Empfängerspule 10 eine im wesentlichen rechteckige Außenkontur besitzt und demgemäß zwei lange, parallel zueinander angeordnete Längsseiten 18a und zwei kurze, senkrecht dazu angeordnete, ebenfalls im wesentlichen parallele Stirnseiten 18b aufweist. Außerdem ist der Grundkörper 18 durch einen parallel zu den Längsseiten 18a verlaufenden Mittelsteg 19 in zwei im wesentlichen spiegelsymmetrisch zu diesem ausgebildete Hälften unterteilt.

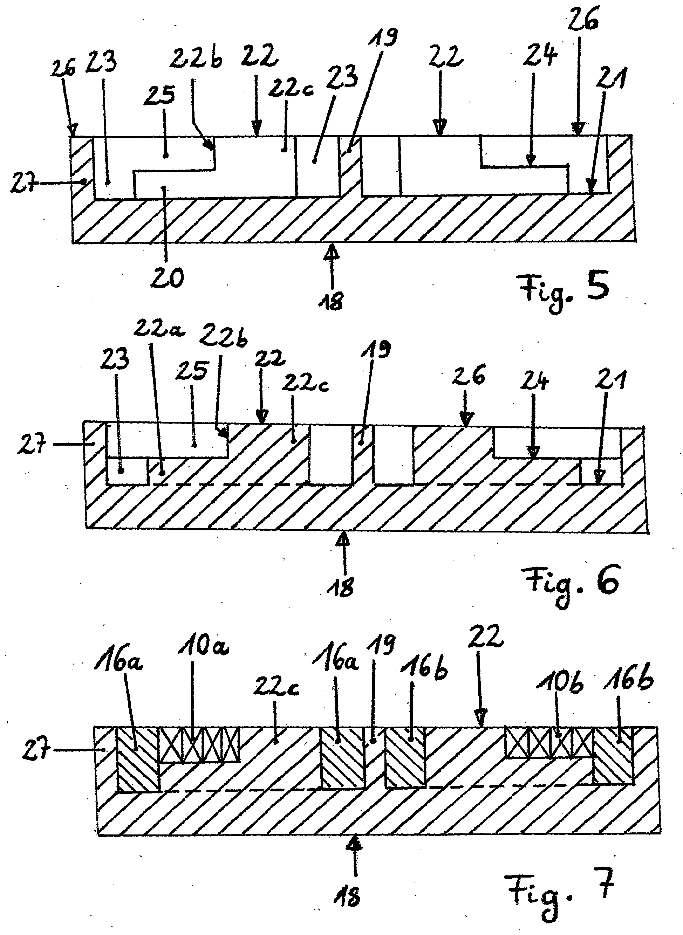

Zur Ausbildung der Streifen 15a, 15b (Fig. 2) wird jede Hälfte des Grundkörpers 18 von seiner in Fig. 4 bis 6 oberen Breitseite her mit einer Vielzahl von ersten Vertiefungen 20 versehen, deren untere Begrenzungen bzw. Böden in Fig. 6 und 7 gestrichelt dargestellt sind. Die Vertiefungen 20 reichen bis zu einer ersten Ebene 21 des Grundkörpers 18 und sind einerseits senkrecht zu den Längsseiten 18a und zum Mittelsteg 19, andererseits parallel zueinander angeordnet. Die Zahl und die Größe dieser Vertiefungen 20 entspricht der Zahl und der Größe der herzustellenden Streifen 15a und 15b.

Zwischen den Vertiefungen 20 stehen bleibende Stege 22 werden gemäß Fig. 5 und 6 an ihren an die Längsseiten 18a und den Mittelsteg 19 grenzenden Enden mit zweiten Vertiefungen 23 versehen, die ebenfalls bis zur ersten Ebene 21 reichen und somit mit den ersten Vertiefungen 20 verbunden sind.

Bei einem bisher für am besten gehaltenen und in Fig. 4 bis 7 dargestellten Ausführungsbeispiel werden nach Ausbildung der zweiten Vertiefungen 23 verbleibende und den Längsseiten 18a zugewandte Teile 22a der Stege 22 (Fig. 6) in ihrer Höhe reduziert, so dass sie nur bis zu einer zweiten Ebene 24 reichen, die von der ersten Ebene 21 einen Abstand hat, der der Dicke der herzustellenden Streifen 15a und 15b entspricht. Dadurch entstehen dritte Vertiefungen 25, die zur Aufnahme der Längsabschnitte 10a, 10b der Empfängerspule 10 dienen. Die Vertiefungen 25 erstrecken sich quer zu den Längsseiten 18a des Grundkörpers 18 von den zweiten Vertiefungen 23 bis zu Stufen 22b der Stege 22 und haben in dieser Erstreckungsrichtung eine Länge, die der Breite der einzulegenden Empfängerspule 10 entspricht, deren Längsabschnitte 10a, 10b in Fig. 7. sichtbar sind.

Die Oberflächen von nicht in ihrer Höhe reduzierten Teilen 22c der Stege 22 liegen in einer dritten Ebene 26 des Grundkörpers 18. In dieser Ebene 26, die von der zweiten Ebene 24 einen Abstand hat, die im wesentlichen der Dicke der Empfängerspule 10 entspricht, liegen auch die Oberflächen eines rundum laufenden Randabschnitts 27 des Grundkörpers 18 sowie des Mittelstegs 19.

In je einem an die Stirnseiten 18b grenzenden Bereich ist der Grundkörper 18 mit weiteren, bis zur zweiten Ebene 24 reichenden Vertiefungen 28 (Fig. 4) versehen. Diese sind so groß ausgebildet, dass sie die Wickelköpfe 10c (Fig. 2) der Empfängerspule 10 aufnehmen können. Außerdem ist die Höhe der verschiedenen Lagen der Empfängerspule 10 so groß gewählt, dass diese, nach dem sie auf die oberen Oberflächen bzw. Böden der Vertiefungen 25 und 28 aufgelegt worden ist, bündig mit der dritten Ebene 26 abschließt, wie Fig. 7 zeigt.

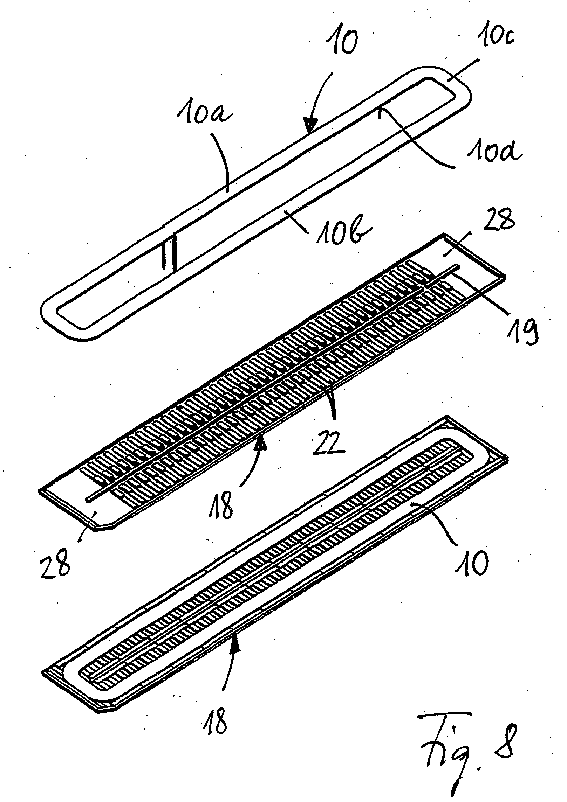

Die Herstellung der Empfangseinheit erfolgt zweckmäßig auf die in Fig. 8 dargestellte Weise wie folgt:
Es wird zunächst der Grundkörper 18 mit den aus Fig. 4 bis 6 ersichtlichen Vertiefungen 20, 23, 25 und 28 und Stegen 22 versehen, indem eine planparallele Platte z. B. einer spanabhebenden Bearbeitung, insbesondere verschiedenen Frässchritten, unterworfen wird. Die Vertiefungen 25 und 28 bilden dann einen zur Aufnahme der Empfängerspule 10 bestimmten Raum. Dieser Raum ist so bemessen, dass die Empfängerspule 10 beim Einlegen in den Grundkörper 18 mit ihrer inneren Kontur 10d einerseits mit der Stufe 22b zur Anlage kommt (Fig. 7) und dadurch in Querrichtung des Grundkörpers 18 positioniert wird, andererseits an die freien Enden des Mittelstegs 19 anstößt und damit in Längsrichtung des Grundkörpers 18 ausgerichtet wird. Dieser Zustand ist im untersten Bild der Fig. 8 dargestellt. Mit anderen Worten bilden die Stufen 22b und die Enden des Mittelstegs 19 Anschlag- und Positionierungsmittel zur exakten Positionierung der Empfängerspule 10 im Grundkörper 18.

Die jeweils letzten, in Fig. 4 mit dem Bezugszeichen 22a versehenen Stege in den beiden Hälften des Grundkörpers 18 sind im Ausführungsbeispiel ohne die Vertiefungen 23 ausgebildet, so dass die im Bereich der Vertiefungen 23 bis zur dritten Ebene 26 reichen und nur die zum Einlegen der Empfängerspule 10 bestimmten Ver- tiefungen 25 aufweisen.

In einem nachfolgenden Verfahrensschritt wird nun die Empfängerspule 10 in den Grundkörper 18 einlegt, wie in Fig. 7 und 8 dargestellt ist. Die Empfängerspule 10 liegt dabei an den Stufen 22b an, so dass die Vertiefungen 23 frei bleiben.

In einem weiteren Verfahrensschritt wird ein flüssiges Gemisch zubereitet, das ein härtbares Gießharz und ein Pulver enthält, das aus einem Material mit hoher Permeabilität besteht. Hierfür kommt insbesondere ein Pulver aus Ferrit, vorzugsweise aus einem Weichferrit zur Anwendung. Die Herstellung dieses Gemisches kann natürlich auch bereits vor der Herstellung des Grundkörpers 18 und/oder vor dem Einlegen der Empfängerspule 10 in diesen erfolgen.

Das fertige Gemisch, das vorzugsweise ein mit einem Härter versehenes Mehrkomponenten-Gießharz enthält, wird nun mit Hilfe nicht dargestellter Gießdüsen in die von der Empfängerspule 10 frei gelassenen Vertiefungen 23 gegossen. Alternativ kann hierfür auch eine über die Länge der Vertiefungen 23 durchlaufende Gießrinne verwendet werden. Das Gießharz dringt beim Gießvorgang nicht nur in die Vertiefungen 23, sondern auch in die zwischen diesen erstreckten, teilweise unterhalb der Empfängerspule 10 liegenden Vertiefungen 20 ein und füllt diese vollständig aus. Der Grundkörper 18 dient hierbei somit als Gießform. Ein Auslaufen des Gießharzes in die Vertiefungen 28 wird durch die erhöhten Stege 22a vermieden.

Der Gießvorgang wird beendet, wenn der Gießharzspiegel die dritte Ebene 26 (Fig. 7) erreicht hat. Dadurch kann das Gießharz in den zwischen den Teilen 22c der Stege 22 befindlichen Bereichen bis zur Ebene 26 aufsteigen, wie in Fig. 3 durch eine gestrichelte Linie 29 angedeutet ist. Das beeinträchtigt aber nicht die Funktion der Streifen 15a, 15b als Flussleitelemente.

Ein Vorteil des beschriebenen Verfahrens besteht darin, dass ein Formkörper nach Art eines Gitterrahmens entsteht, der die aus Fig. 2 und 3 ersichtlichen Streifen 15a, 15b und Verbindungselemente 16a, 16b mit dem Unterschied enthält, dass diese einstückig hergestellt sind und einen einstückigen, zusammenhängenden Gitterrahmen bilden, der im Grundkörper 18 versenkt angeordnet ist. Besondere Maßnahmen zur Verbindung der Streifen 15a, 15b und Verbindungselemente 16a, 16b sind daher nicht erforderlich. Vorteilhaft ist ferner, dass auch die Empfängerspule 10 bereits in den Grundkörper 18 eingesetzt und durch den Gießvorgang fest in diesem eingebettet ist. Der Grundkörper 18, die Empfängerspule 10 und die Flussleitelemente 15a, 15b, 16a, 16b bilden daher eine komplett vormontierte bzw. vormontierbare Empfangs- und Baueinheit, die als Ganzes mit der Verkleidung 11 (Fig. 1) des Magnetrückenkastens 6 verbunden oder in diese integriert werden kann.

Bei Anwendung des anhand der Fig. 5 bis 8 beschriebenen Gießverfahrens kann es vorteilhaft sein, die Flußleitelemente 15a, 15b (Fig. 2) als über die Länge der Empfängerspule 10 durchgehende Platten auszubilden. In diesem Fall könnten die Stege 22 (Fig. 5 bis 7) ganz entfallen und die Vertiefungen 20 in Längsrichtung des Grundkörpers 18 durchgehend ausgebildet werden. Es würde dann z.B. in einem ersten Schritt der ganze untere Raum des Grundkörpers 18 bis zur Ebene 24 (Fig. 6) mit dem Gießharzgemisch ausgefüllt, dann die Empfängerspule 10 eingelegt und abschließend der in Fig. 7 von den Flußleitelementen 16a und 16b eingenommene Raum mit der Gießharzmischung gefüllt.

Der Grundkörper 18 wird vorzugsweise aus einem Kunststoff, insbesondere einem Schaumstoff wie z. B. Polyurethan, und mit ganz besonderem Vorteil aus einem Schaumstoff mit dämpfender Wirkung hergestellt. Alternativ zur spanabhebenden Bearbeitung ist es aber auch möglich, den Grundkörper 18 als Ganzes durch Gießen, Schäumen oder Pressen unter Anwendung eines entsprechenden Formwerkzeugs herzustellen.

Die Erfindung ist nicht auf das beschriebene Ausführungsbeispiel beschränkt, das auf vielfache Weise abgewandelt werden kann. Das gilt insbesondere für die aus Fig. 2 und 3 ersichtliche gitterrahmenförmige Struktur der Flussleitelemente, da diese auch in anderen zweckmäßigen Mustern angeordnet und größer oder kleiner als beschrieben ausgebildet werden können. Weiterhin ist es bei Bedarf möglich, den Grundkörper 18 nur mit den Flussleitelementen 15a, 15b, 16a, 16b zu versehen und die Vertiefungen 25 beim Gießen der Flussleitelemente mit einem Verdrängungskörper auszufüllen, der entsprechend der Empfängerspule 10 ausgebildet ist, um dadurch ein Eindringen des Gießharzes in die Vertiefungen 25 zu verhindern. In derselben Weise kann vorgegangen werden, wenn der Grundkörper 18 durch Gießen, Pressen od. dgl. hergestellt wird, um dabei die Vertiefungen 25 und 28 für die Empfängerspule 10 frei zu halten. Die Empfängerspule 10 würde dann in einem späteren Verfahrensschritt in die aus dem Grundkörper 18 und den Flussleitelementen 15a, 15b, 16a, 16b gebildete Baueinheit eingesetzt. Die komplette Empfangseinheit wäre in diesem Fall zweiteilig ausgebildet. Weiter ist klar, dass die Empfängerspule 10 an geeigneten Stellen mit nicht gezeigten Anschlusskontakten versehen ist und die Vertiefungen 28 auch ganz fehlen können, insbesondere wenn es erwünscht ist, die Wicklungsköpfe 10c analog zu DE 10 2004 056 439 A1 nach hinten abzubiegen. Schließlich versteht sich, dass die verschiedenen Merkmale auch in anderen als den beschriebenen und dargestellten Kombinationen angewendet werden können.

## Patentansprüche

1. Empfangseinheit mit einer Empfängerspule (10) zur berührungslosen Übertragung von elektrischer Energie, wobei der Empfängerspule (10) eine Vielzahl von zur Konzentration von Feldlinien (14a, 14b) bestimmten Flussleitelementen (15a, 15b, 16a, 16b) zugeordnet ist, die aus einem Material mit im Vergleich zu Luft hoher Permeabilität bestehen, **dadurch gekennzeichnet, dass** sie einen Grundkörper (18) mit zur Aufnahme der Flussleitelemente (15a, 15b, 16a, 16b) bestimmten Vertiefungen (20, 23) aufweist, dass die Flussleitelemente (15a, 15b, 16a, 16b) aus einem zusammenhängenden, in den Vertiefungen (20, 23) angeordneten Formteil bestehen, das mit dem Grundkörper (18) zu einer komplett vorgefertigten Baueinheit zusammengefasst ist, und dass der Grundkörper (18) mit Anschlag- und Positionierungsmitteln (19, 22b) für die Empfängerspule (10) versehen ist.

2. Empfangseinheit mit einer Empfängerspule (10) zur berührungslosen Übertragung von elektrischer Energie, wobei der Empfängerspule (10) eine Vielzahl von zur Konzentration von Feldlinien (14a, 14b) bestimmten Flussleitelementen (15a, 15b, 16a, 16b) zugeordnet ist, die aus einem Material mit im Vergleich zu Luft hoher Permeabilität bestehen, **dadurch gekennzeichnet, dass** sie einen Grundkörper (18) mit zur Aufnahme der Flussleitelemente (15a, 15b, 16a, 16b) bestimmten Vertiefungen (20, 23) aufweist, dass die Flussleitelemente (15a, 15b, 16a, 16b) aus einem zusammenhängenden, in den Vertiefungen (20, 23) angeordneten Formteil bestehen, das mit dem Grundkörper (18) zu einer komplett vorgefertigten Baueinheit zusammengefasst ist, und dass der Grundkörper (18) zwischen den Vertiefungen (20, 23) mit zur Auflage der Empfängerspule (10) bestimmten Stegen (22) versehen ist.

3. Empfangseinheit nach Anspruch 1 oder 2, **dadurch gekennzeichnet, dass** der Grundkörper (18) aus einem Kunststoff oder einem Schaumstoff besteht.

4. Empfangseinheit nach einem der Ansprüche 1 bis 3, **dadurch gekennzeichnet, dass** die Empfängerspule (10) zwei mit Abstand angeordnete Längsabschnitte (10a, 10b) und diese verbindende Wickelköpfe (10c) aufweist.

5. Empfangseinheit nach Anspruch 4, **dadurch gekennzeichnet, dass** der Grundkörper (18) einen zur Aufnahme der Empfängerspule (10) bestimmten Raum (25, 28) aufweist, der die zur Auflage der Längsabschnitte (10a, 10b) der Empfängerspule (10) dienenden Stege (22) und seitlich von den Flussleitelementen (15a, 15b, 16a, 16b) angeordnete Vertiefungen (28) im Grundkörper (18) enthält.

6. Empfangseinheit nach einem der Ansprüche 1 bis 5, **dadurch gekennzeichnet, dass** die Flussleitelemente (15a, 15b, 16a, 16b) aus einem Ferrit enthaltenden Material bestehen.

7. Empfangseinheit nach einem der Ansprüche 4 bis 6, **dadurch gekennzeichnet, dass** die Flussleitelemente quer zu den Längsabschnitten (10a, 10b) der Empfängerspule (10) erstreckte Streifen (15a, 15b) und parallel zu den Längsabschnitten (10a, 10b) erstreckte, die Streifen (15a, 15b) miteinander verbindende Verbindungselemente (16a, 16b) enthalten.

8. Verfahren zur Herstellung einer mit einer Empfängerspule (10) versehenen Empfangseinheit zur berührungslosen Übertragung von elektrischer Energie, wobei der Empfängerspule (10) eine Vielzahl von zur Konzentration der Feldstärke bestimmten Flussleitelementen (15a, 15b, 16a, 16b) zugeordnet wird, die aus einem Material mit im Vergleich zu Luft hoher Permeabilität hergestellt werden, **dadurch gekennzeichnet, dass** die Flussleitelemente (15a, 15b, 16a, 16b) in einem als formgebendes Teil dienenden Grundkörper (18) ausgebildet werden, indem der Grundkörper (18) mit zur Aufnahme der Flussleitelemente (15a, 15b, 16a, 16b) bestimmten Vertiefungen (20, 23) versehen wird, ein flüssiges Gemisch aus einem Gießharz und einem Pulver aus dem Material hoher Permeabilität hergestellt wird und das flüssige Gemisch dann zur Bildung der Flussleitelemente (15a, 15b, 16a, 16b) in die Vertiefungen (20, 23) gegossen wird.

9. Verfahren nach Anspruch 8, **dadurch gekennzeichnet, dass** das Gemisch nach dem Gießen ausgehärtet bzw. der Aushärtung überlassen wird.

10. Verfahren nach einem der Ansprüche 8 oder 9, **dadurch gekennzeichnet, dass** die Stege (22) mit zur Anlage der Empfängerspule (10) bestimmten Stufen (22b) versehen werden.

11. Verfahren nach einem der Ansprüche 8 bis 10, **dadurch gekennzeichnet, dass** die Vertiefungen (20, 23) durch spanende Bearbeitung einer den Grundkörper (18) bildenden Platte hergestellt werden.

12. Verfahren nach Anspruch 9, **dadurch gekennzeichnet, dass** der Grundkörper (18) aus Kunststoff oder Schaumstoff hergestellt wird und in einer als Negativform des Grundkörpers (18) ausgebildeten Form durch Gießen, Schäumen oder Pressen hergestellt wird.

13. Verfahren nach Anspruch 11 oder 12, **dadurch gekennzeichnet, dass** der Grundkörper (18) mit einem zur Aufnahme der Empfängerspule (10) bestimmten Raum (25, 28) versehen wird und dass die Empfängerspule (10) vor dem Eingießen des Gemisches in den Grundkörper (18) eingelegt wird.

14. Verfahren nach Anspruch 12 oder 13, **dadurch gekennzeichnet, dass** der Raum (25, 28) durch Einlegen eines Verdrängungskörpers in die Form hergestellt wird.

## Claims

1. A receiver unit having a receiver coil (10) for the contactless transfer of electric energy, wherein the receiver coil (10) has a multiplicity of flow conducting elements (15a, 15b, 16a, 16b) destined for concentrating field lines (14a, 14b) associated with it, which consist of a highly permeable material in comparison to air, **characterised in that** the receiver coil (10) comprises a basic body (18) with recesses (20, 23) for receiving the flow conducting elements (15a, 15b, 16a, 16b), that the flow conducting elements (15a, 15b, 16a, 16b) consist of a coherent moulded part arranged in the recesses (20, 23), which moulded part is combined with the basic body (18) to form a complete prefabricated structural unit, and **in that** the basic body (18) is provided with stop and positioning means (19, 22b) for the receiver coil (10).

2. The receiver unit having a receiver coil (10) for the contactless transfer of electric energy, wherein the receiver coil (10) has a multiplicity of flow conducting elements (15a, 15b, 16a, 16b) destined for concentrating field lines (14a, 14b) associated with it, which consist of a highly permeable material in comparison to air, **characterised in that** it has a basic body (18) with recesses (20, 23) destined to receive the flow conducting elements (15a, 15b, 16a, 16b), **in that** the flow conducting elements (15a, 15b, 16a, 16b) consist of a coherent moulded part arranged in the recesses (20, 23), which is combined with the basic body (18) to form a complete prefabricated structural unit, and **in that** the basic body (18), between the recesses (20, 23), is provided with webs (22) destined to support the receiver coil (10).

3. The receiver unit according to claim 1 or 2, **characterised in that** the basic body (18) consists of a plastic or a foam material.

4. The receiver unit according to one of claims 1 to 3, **characterised in that** the receiver coil (10) has two spaced apart longitudinal portions (10a, 10b) and winding heads (10c) connecting them to each other.

5. The receiver unit according to claim 4, **characterised in that** the basic body (18) has a space (25, 28) destined to receive the receiver coil (10), which contains the webs (22) serving to support the longitudinal portions (10a, 10b) of the receiver coil (10) and recesses (28) in the basic body (18), the recesses being arranged laterally of the flow conducting elements (15a, 15b, 16a, 16b).

6. The receiver unit according to one of claims 1 to 5, **characterised in that** the flow conducting elements (15a, 15b, 16a, 16b) consist of a material containing ferrite.

7. The receiver unit according to one of claims 4 to 6, **characterised in that** the flow conducting elements (15a, 15b, 16a, 16b) contain strips (15a, 15b) extending transversely to the longitudinal portions (10a, 10b) of the receiver coil (10) and connecting elements (16a, 16b) connecting the strips (15a, 15b) to one another, which extend in parallel to the longitudinal portions (10a, 10b).

8. A method for manufacturing a receiver unit having a receiver coil (10) for the contactless transfer of electric energy, wherein the receiver coil (10) has a multiplicity of flow conducting elements (15a, 15b, 16a, 16b) destined for concentrating field lines (14a, 14b) associated with it, which are made of a highly permeable material in comparison to air, **characterised in that** the flow conducting elements (15a, 15b, 16a, 16b) are formed in a basic body (18) serving as a form-giving part **in that** the basic body (18) is provided with recesses (20, 23) destined for receiving the flow conducting elements (15a, 15b, 16a, 16b), a liquid mixture is produced from a casting resin and a powder made from the highly permeable material, and the liquid mixture is then poured into the recesses (20, 23) for forming the flow conducting elements (15a, 15b, 16a, 16b).

9. The method according to claim 8, **characterised in that** the mixture, after casting, is hardened or left to harden.

10. The method according to one of claims 8 or 9, **characterised in that** the webs (22) are provided with steps (22b) destined to support the receiver coil (10).

11. The method according to one of claims 8 to 10, **characterised in that** the recesses (20, 23) are produced by machining a plate forming the basic body (18).

12. The method according to claim 9, **characterised in that** the basic body (18) is manufactured from a plastic or a foam material and is produced by casting, foaming or pressing, in a mould which is a negative shape of the basic body (18).

13. The method according to claim 11 or 12, **characterised in that** the basic body (18) is provided with a space (25, 28) destined to receive the receiver coil (10) and **in that** the receiver coil (10) is placed into the basic body (18) prior to adding the mixture.

14. The method according to claim 12 or 13, **characterised in that** the space (25, 28) is produced by placing a displacer into the mould.

## Revendications

1. Unité de réception avec une bobine réceptrice (10) pour le transfert sans contact d'énergie électrique, dans laquelle on associe à la bobine réceptrice (10) une pluralité d'éléments conducteurs de flux (15a, 15b, 16a, 16b) destinés à la concentration de lignes de champ (14a, 14b), lesquels se composent d'un matériau à perméabilité élevée en comparaison avec l'air, **caractérisée en ce qu'**elle présente un corps de base (18) avec des creux (20, 23) destinés à la réception des éléments conducteurs de flux (15a, 15b, 16a, 16b), que les éléments conducteurs de flux (15a, 15b, 16a, 16b) se composent d'une pièce moulée continue disposée dans les creux (20, 23), laquelle est assemblée avec le corps de base (18) en une unité modulaire complètement préfabriquée, et que le corps de base (18) est doté de moyens de butée et de positionnement (19, 22b) pour la bobine réceptrice (10).

2. Unité de réception avec une bobine réceptrice (10) pour le transfert sans contact d'énergie électrique, dans laquelle on associe à la bobine réceptrice (10) une pluralité d'éléments conducteurs de flux (15a, 15b, 16a, 16b) destinés à la concentration de lignes de champ (14a, 14b), lesquels se composent d'un matériau à perméabilité élevée en comparaison avec l'air, **caractérisée en ce qu'**elle présente un corps de base (18) avec des creux (20, 23) destinés à la réception des éléments conducteurs de flux (15a, 15b, 16a, 16b), que les éléments conducteurs de flux (15a, 15b, 16a, 16b) se composent d'une pièce moulée continue disposée dans les creux (20, 23), laquelle est assemblée avec le corps de base (18) en une unité modulaire complètement préfabriquée, et que le corps de base (18) est doté de nervures (22) entre les creux (20, 23) destinées à l'appui de la bobine réceptrice (10).

3. Unité de réception selon la revendication 1 ou 2, **caractérisée en ce que** le corps de base (18) se compose d'un plastique ou d'une mousse.

4. Unité de réception selon l'une des revendications 1 à 3, **caractérisée en ce que** la bobine réceptrice (10) présente deux segments longitudinaux (10a, 10b) disposés à distance et des têtes de bobine (10c) reliant ceux-ci.

5. Unité de réception selon la revendication 4, **caractérisée en ce que** le corps de base (18) présente un espace (25, 28) destiné à la réception de la bobine réceptrice (10), lequel contient les nervures (22) servant à l'appui des segments longitudinaux (10a, 10b) de la bobine réceptrice (10) et des creux (28) disposés sur le côté des éléments conducteurs de flux (15a, 15b, 16a, 16b) dans le corps de base (18).

6. Unité de réception selon l'une des revendications 1 à 5, **caractérisée en ce que** les éléments conducteurs de flux (15a, 15b, 16a, 16b) se composent d'un matériau contenant de la ferrite.

7. Unité de réception selon l'une des revendications 4 à 6, **caractérisée en ce que** les éléments conducteurs de flux contiennent des bandes (15a, 15b) s'étendant transversalement aux segments longitudinaux (10a, 10b) de la bobine réceptrice (10) et des éléments de liaison (16a, 16b) étendus parallèlement aux segments longitudinaux (10a, 10b), reliant les bandes (15a, 15b) entre elles.

8. Procédé pour la fabrication d'une unité de réception dotée d'une bobine réceptrice (10) pour le transfert sans contact d'énergie électrique, dans lequel on associe à la bobine réceptrice (10) une pluralité d'éléments conducteurs de flux (15a, 15b, 16a, 16b) destinés à la concentration de la force de champ, lesquels sont fabriqués en un matériau à perméabilité élevée en comparaison avec l'air, **caractérisé en ce que** les éléments conducteurs de flux (15a, 15b, 16a, 16b) sont réalisés dans un corps de base (18) servant d'élément conférant une forme **en ce que** le corps de base (18) est doté de creux (20, 23) destinés à la réception des éléments conducteurs de flux (15a, 15b, 16a, 16b), qu'un mélange liquide en une résine coulée et une poudre est produit à partir du matériau à haute perméabilité et que le mélange liquide est ensuite coulé dans les creux (20, 23) pour la formation des éléments conducteurs de flux (15a, 15b, 16a, 16b).

9. Procédé selon la revendication 8, **caractérisé en ce qu'**on laisse durcir le mélange, ou fait durcir celui-ci après le coulage.

10. Procédé selon l'une des revendications 8 ou 9, **caractérisé en ce que** les nervures (22) sont dotées de gradins (22b) destinés à la butée de la bobine réceptrice (10).

11. Procédé selon l'une des revendications 8 à 10, **caractérisé en ce que** les creux (20, 23) sont produits par usinage par enlèvement d'une plaque formant le corps de base (18).

12. Procédé selon la revendication 9, **caractérisé en ce que** le corps de base (18) est fabriqué en plastique ou en mousse et est fabriqué par coulage, moussage ou pressage dans un moule réalisé en tant que moule négatif du corps de base (18).

13. Procédé selon la revendication 11 ou 12, **caractérisé en ce que** le corps de base (18) est doté d'un espace (25, 28) destiné à la réception de la bobine réceptrice (10) et que la bobine réceptrice (10) est placée dans le corps de base (18) avant le coulage du mélange.

14. Procédé selon la revendication 12 ou 13, **caractérisé en ce que** l'espace (25, 28) est produit par insertion d'un corps de refoulement dans le moule.
